Europäisches Patentamt

European Patent Office

Office européen des brevets

(11) Veröffentlichungsnummer: **0 469 246 B1**

(12) **EUROPÄISCHE PATENTSCHRIFT**

(45) Veröffentlichungstag der Patentschrift: **12.04.95**

(21) Anmeldenummer: **91107147.0**

(22) Anmeldetag: **03.05.91**

(51) Int. Cl.⁶: **F02D 41/14**, B60K 28/16

(54) **Verfahren zur Bestimmung eines den Fahrkomfort optimierenden Wertes des Antriebsmomentes.**

(30) Priorität: **02.06.90 DE 4017890**

(43) Veröffentlichungstag der Anmeldung:
**05.02.92 Patentblatt 92/06**

(45) Bekanntmachung des Hinweises auf die
Patenterteilung:
**12.04.95 Patentblatt 95/15**

(84) Benannte Vertragsstaaten:
**ES FR GB IT NL SE**

(56) Entgegenhaltungen:
**EP-A- 0 318 857**
**EP-A- 0 397 329**
**DE-A- 3 814 956**
**GB-A- 2 153 910**

**PATENT ABSTRACTS OF JAPAN vol. 9, no.
313 (M-437) 10. Dezember 1985 & JP-A-60 147
546 (TOYOTA JIDOSHA KK) 3. August 1985**

(73) Patentinhaber: **MERCEDES-BENZ AG**
**Mercedesstrasse 136**
**D-70327 Stuttgart (DE)**

(72) Erfinder: **Raiser, Hartmut**
**Fuchslöcher Strasse 3**
**W-7303 Neuhausen a. d. Fildern (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Bestimmung eines den Fahrkomfort optimierenden Wertes des Antriebsmomentes gemäß dem Oberbegriff des Patentanspruches 1.

Es ist bereits ein gattungsgemäßes Verfahren bekannt (DE 34 04 154 A1), wonach ein Eingriff in die Gemischbildungsanlage einer Brennkraftmaschine eines Kraftfahrzeuges in Abhängigkeit der Möglichkeit des Auftretens von Schwingungen des Antriebsstranges erfolgt. Diese Möglichkeit des Auftretens von Schwingungen des Antriebsstranges wird dabei aus einer Differenz der gemessenen Drehzahlen des Schwungrades der Brennkraftmaschine und der angetriebenen Räder abgeleitet. Dabei wird aus der Fahrpedalstellung ein Fahrerwunsch des Sollmomentes der Brennkraftmaschine abgeleitet. Von diesem abgeleiteten Wert des Sollmomentes wird dabei ein Moment subtrahiert, das zu der Differenz der Drehzahl des Schwungrades der Brennkraftmaschine und der auf den Getriebeeingang zurückgerechneten Drehzahl der angetriebenen Räder proportional ist. Die auf den Getriebeeingang zurückgerechnete Drehzahl der angetriebenen Räder ergibt sich dabei aus dem gemessenen Wert der Drehzahl der angetriebenen Räder unter Berücksichtigung des sich durch das Getriebe und das Achsdifferential ergebenden Übersetzungsverhältnisses.

Es ist bekannt (DE 37 22 049 A1), den Antriebsstrang und/oder die Drehzahl der Räder auf Schwingungen zu untersuchen, um eine Schlupferkennung durchzuführen, indem bei Auftreten dieser Schwingungen geschlossen wird, daß ein großer Schlupf auftritt. Dieses Verfahren wird insbesondere bei einem allradangetriebenen Fahrzeug als vorteilhaft angegeben, da bei einem solchen Fahrzeug keine Drehzahl eines nicht angetriebenen Rades als Referenzdrehzahl eines sich schlupffrei drehenden Rades zur Verfügung steht.

Aus der EP-A-318 857 ist es bekannt, zur Bestimmung des Maximums der Kraftschlußbeiwert-Radschlupf-Kurve ($\mu$-$\sigma$-Kurve) deren Ableitung zu ermitteln. Dazu wird aus einer charakteristischen Änderung der Ableitung auf den Ort des Maximums der $\mu$-$\sigma$-Kurve geschlossen.

Aufgabe der Erfindung ist es, ein Verfahren zur Bestimmung eines den Fahrkomfort optimierenden Wertes des Antriebsmomentes so auszubilden, daß ruckartige Bewegungen des Fahrzeuges möglichst weitgehend vermieden werden und daß eine verbesserte Anpassung der Reduzierung des Antriebsmomentes zur Vermeidung von Schwingungen des Antriebsstranges an aktuelle Fahrbedingungen erfolgt.

Diese Aufgabe wird bei einem gattungsgemäßen Verfahren erfindungsgemäß mit dem kennzeichnenden Merkmal des Anspruchs 1 gelöst, wobei die Merkmale der Unteransprüche vorteilhafte Aus- und Weiterbildungen kennzeichnen.

Weitere Vorteile der Erfindung gegenüber dem bekannten Stand der Technik bestehen darin, daß mit der verbesserten Einstellung des Antriebsmomentes auch der Antriebsstrang in optimierter Weise geschont wird.

In besonders vorteilhafter Weise kann das erfindungsgemäße Verfahren in Verbindung mit einer Antriebsschlupfregelung (ASR) eingesetzt werden, da es somit zu einem besseren Zeitverhalten der ASR führt, da die potentielle Energie, die durch eine Torsion des Antriebsstranges vorhanden ist, bei der Bestimmung des einzustellenden Motormomentes berücksichtigt wird.

Ein Ausführungsbeispiel der Erfindung ist in der Zeichnung schematisch dargestellt und wird im folgenden näher beschrieben. Es zeigen:

Fig. 1: einen möglichen Ablauf des erfindungsgemäßen Verfahrens zur Bestimmung eines den Fahrkomfort optimierenden Wertes des Antriebsmomentes,

Fig. 2: eine näherungsweise Beschreibung des schwingungsfähigen Systems Motor<->Antriebsstrang<->Räder bei niedrigem Radschlupf,

Fig. 3: eine näherungsweise Beschreibung des schwingungsfähigen Systems Motor<->Antriebsstrang<->Räder bei dem der maximalen Traktion entsprechenden Radschlupf,

Fig. 4: den Verlauf einer $\mu$-$\sigma$-Kurve,

Fig. 5: eine mögliche Variation des Proportionalitätsfaktors $K_1$ mit dem Radschlupf $\sigma$,

Fig.6-9: eine Darstellung eines Ausführungsbeispieles der Meßwertaufnahme und Weiterverarbeitung, wobei in den Fig. im einzelnen dargestellt ist:

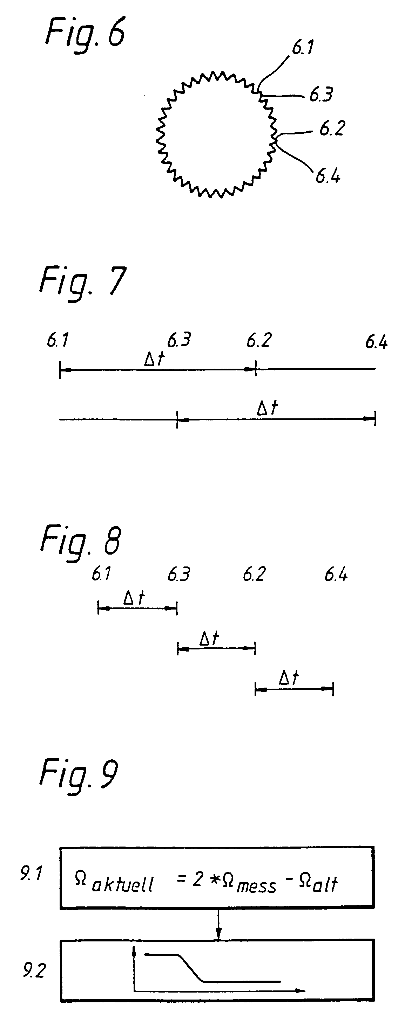

Fig. 6: ein sägezahnförmiges Impulsrad mit einer Bezeichnung der ansteigenden und abfallenden Teile der sägezahnförmigen Oberfläche,

Fig. 7: eine erste Auswertungsmöglichekit unter Berücksichtigung sowohl ansteigender als auch abfallender Flanken des Meßsignales,

Fig. 8: eine zweite Auswertungsmöglichkeit unter Berücksichtigung sowohl ansteigender als auch abfallender Flanken des Meßsignales und

Fig. 9: ein Verfahrensablauf zur Auswertung des Meßsignales.

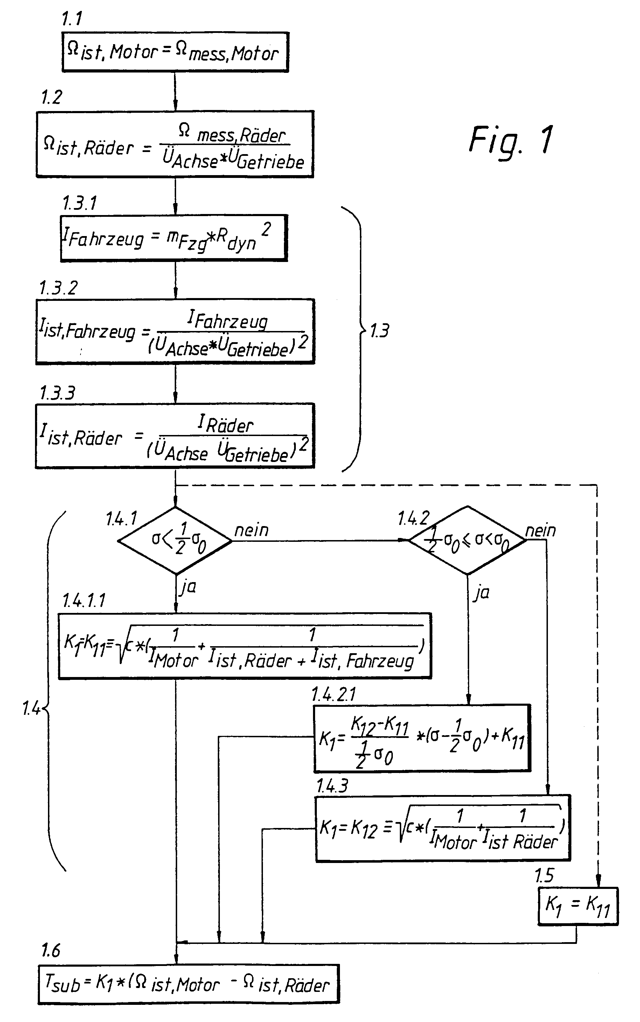

Entsprechend der Darstellung der Fig. 1 erfolgt ein möglicher Ablauf des erfindungsgemäßen Verfahrens zur Bestimmung eines den Fahrkomfort optimierenden Wertes des Antriebsmomentes durch eine Dämpfung von Antriebsstrangschwingungen. Grundsätzlich liegt bei einer unendlichen Steigung der $\mu$-$\sigma$-Kurve eine geringe Eigenfrequenz des schwingungsfähigen Systems Motor-Antriebsstrang-Räder vor und das System schwingt ungedämpft. In der Realität ist die Steigung der $\mu$-$\sigma$-Kurve jedoch auch für kleine Schlupfwerte kleiner als unendlich, d.h. daß die durch eine Momentenänderung eintretende Schlupfänderung eine dämpfende Wirkung ausübt. Gleichzeitig verringert sich dabei die Frequenz. Nimmt die Steigung der $\mu$-$\sigma$-Kurve weiter ab, durchläuft die Frequenz ein Minimum und die Dämpfung ein Maximum. Diese beiden Größen streben dann den Werten zu, die bei der Steigung Null der $\mu$-$\sigma$-Kurve herrschen. Dieser Fall ist am Schlupfkurvenmaximum vorhanden oder bei einer Schlupfkurve, die im instabilen Bereich nicht abfällt. Weil eine Schlupfänderung nicht zu einer Änderung des übertragenen Momentes führen kann, hat die Fahrzeugmasse dann keinen Einfluß auf die Frequenz der Schwingung, die dann den maximalen Wert annimmt. Die Dämpfung ist wieder gleich Null.

In dem Ausführungsbeispiel entsprechend der Fig. 1 wird von dem an der Brennkraftmaschine einzustellenden Antriebsmoment ein Moment $T_{sub}$ subtrahiert, das proportional ist zur Differenz der entsprechend den Schritten 1.1 und 1.2 ermittelten, auf einen Punkt (beispielsweise Getriebeeingang) bezogenen Drehzahlen $\Omega_{ist,Motor}$ und $\Omega_{ist,Räder}$. Diese Drehzahlen ergeben sich aus den jeweiligen gemessenen Drehzahlen $\Omega_{mess,Motor}$ und $\Omega_{mess,Räder}$ durch Umrechnung unter Berücksichtigung der jeweiligen Getriebeübersetzungen. In dem in Fig. 1 dargestellten Ausführungsbeispiel werden diese Drehzahlen auf den Getriebeeingang bezogen. D.h., daß die Drehzahl $\Omega_{ist,Motor}$ gleich der gemessenen Drehzahl $\Omega_{mess,Motor}$ ist und daß sich die Drehzahl $\Omega_{ist,Räder}$ aus der gemessenen Drehzahl $\Omega_{mess,Räder}$ unter Berücksichtigung der Übersetzungsverhältnisse $\ddot{U}_{Achse}$ des Achsdifferentiales sowie $\ddot{U}_{Getriebe}$ des Getriebes ergibt. Die Differenz dieser Drehzahlen $\Omega_{ist,Motor}$ und $\Omega_{ist,Räder}$ ist dabei gerade die "Aufziehgeschwindigkeit" des Antriebsstranges.

Entsprechend dem Schritt 1.3 erfolgt die Bestimmung der Trägheitsmomente, wobei diese Trägheitsmomente auf denselben Punkt bezogen werden wie die Drehzahlen. Die Fahrzeugmasse $m_{Fzg}$ bewirkt dabei entsprechend dem Schritt 1.3.1 ein Trägheitsmoment $I_{Fahrzeug}$ von:

$$I_{Fahrzeug} = m_{Fzg} * R_{dyn}^2,$$

wobei $R_{dyn}$ der dynamische Radradius ist. Die Umrechnung dieses Momentes auf den Getriebeeingang führt dann entsprechend dem Schritt 1.3.2 auf das Trägheitsmoment $I_{ist,Fahrzeug}$:

$$I_{ist,Fahrzeug} = I_{Fahrzeug} / (\ddot{U}_{Achse} * \ddot{U}_{Getriebe})^2.$$

Entsprechend ergibt sich für das Trägheitsmoment $I_{ist,Räder}$ entsprechend dem Schritt 1.3.3:

$$I_{ist,Räder} = I_{Räder} / (\ddot{U}_{Achse} * \ddot{U}_{Getriebe})^2.$$

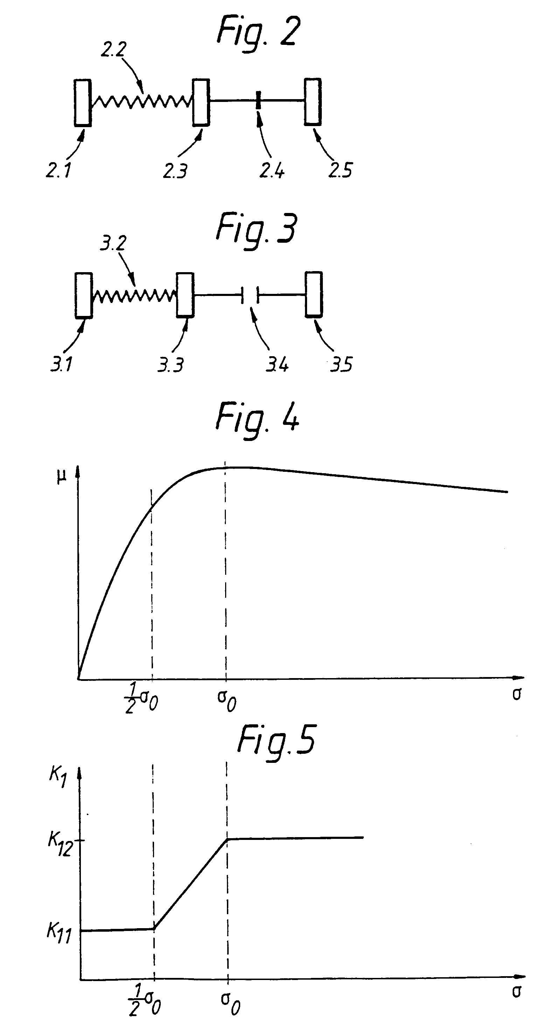

Ein Proportionalitätsfaktor $K_1$ wird so gewählt, daß das Schwingungsverhalten des Systems gerade aperiodisch ist. Dazu kann der Proportionalitätsfaktor $K_1$ in Abhängigkeit der Steigung der $\mu$-$\sigma$-Kurve bestimmt werden. Entsprechend dem Ausführungsbeispiel der Fig. 1 erfolgt nun aber entsprechend der Darstellung des Schrittes 1.4 keine Bestimmung der Steigung der $\mu$-$\sigma$-Kurve, sondern die Variation des Proportionalitätsfaktors $K_1$ erfolgt mittels des Schlupfes selbst. Dazu werden zunächst zwei Extremfälle betrachtet. Beim Schlupf Null wird die Steigung der $\mu$-$\sigma$-Kurve in erster Näherung als unendlich betrachtet. Das bedeutet, daß die Fahrzeugmasse voll an die Trägheitsmasse der Räder $I_{Räder}$ angekoppelt ist und somit voll bei der Bestimmung der Trägheitsmomente entsprechend Fig. 2 mit einem Anteil $I_{Fahrzeug}$ eingeht. Aus der Bedingung der aperiodischen Dämpfung erhält man für diesen Fall:

$$K_1 = K_{11} \equiv \sqrt{\{ c * ( 1/I_{Motor} + 1/(I_{ist,Räder} + I_{ist,Fahrzeug}) ) \}}.$$

Der andere zu betrachtende Extremfall ist dadurch gegeben, daß die Steigung der $\mu$-$\sigma$-Kurve gleich Null ist. Weil dann bei einem zunehmenden Antriebsmoment die Räder durchdrehen, ohne daß eine Beschleunigung des Fahrzeuges erfolgt, geht die Fahrzeugmasse nicht mehr in die Berechnung der Trägheitsmomente ein. Dieser Fall ist in Fig. 3 dargestellt. Die Konstante c ist entsprechend der Darstellung der Fig. 2 und 3 die Federsteifigkeit des Antriebsstranges. Somit ergibt sich aus der Bedingung für die aperiodische Dämpfung für diesen Fall der Proportionalitätsfaktor $K_1$ zu:

EP 0 469 246 B1

$$K_1 = K_{12} \equiv \sqrt{\{ c^* ( 1/I_{Motor} + 1/I_{ist,Räder} ) \}}.$$

In Fig. 4 ist der Verlauf einer $\mu$-$\sigma$-Kurve dargestellt. Dabei zeigt sich, daß die $\mu$-$\sigma$-Kurve bei dem Schlupfwert $\sigma_0$ die Steigung 0 sowie ihr Maximum annimmt. Beginnend von dem Schlupfwert $\sigma = 0$ weist die Kurve eine nahezu konstante Steigung auf bis ca. zum Schlupfwert $\frac{1}{2}\sigma_0$. Entsprechend Fig. 5 kann nun eine Variation des Proportionalitätsfaktors $K_1$ mit dem Schlupf $\sigma$ erfolgen. Dabei ist mit $\sigma_0$ der Wert des Schlupfes bezeichnet, bei dem die $\mu$-$\sigma$-Kurve ihr Maximum aufweist. Da die Steigung beginnend von dem Wert des Schlupfes $\sigma = 0$ bis zum Wert $\sigma = \frac{1}{2}\sigma_0$ als nahezu konstant steigend angenommen wird mit einer Steigung m, für die gilt m$\approx\infty$, gilt somit für den Bereich $\sigma = 0$ bis $\sigma = \frac{1}{2}\sigma_0$, daß der Proportionalitätsfaktor $K_1$ entsprechend der Darstellung der Fig. 5 gerade gleich konstant den Wert $K_{11}$ annimmt, entsprechend dem Schritt 1.4.1 und dem Schritt 1.4.1.1. Der Übergang zu dem Wert $K_1 = K_{12}$ erfolgt dabei in dem Ausführungsbeispiel der Fig. 5 linear ab dem Wert $\sigma = \frac{1}{2}\sigma_0$ bis zu dem Wert $\sigma = \sigma_0$. Der Wert des Proportionalitätsfaktors $K_1$ bestimmt sich also entsprechend den Schritten 1.4.2 und 1.4.2.1 ab diesem Wert des Schlupfes $\sigma$ in Abhängigkeit des Schlupfes $\sigma$ nach der Gleichung:

$$K_1 = \frac{K_{12} - K_{11}}{\frac{1}{2}\sigma_0} * ( \sigma - \frac{1}{2}\sigma_0 ) + K_{11} .$$

Entsprechend der Darstellung in dem Schritt 1.4.3 nimmt der Proportionalitätsfaktor $K_1$ bei Werten des Schlupfes $\sigma$ oberhalb des Wertes $\sigma_0$ konstant den Wert $K_{12}$ an.

Es ist allerdings entsprechend dem Schritt 1.5 auch möglich, den Proportionalitätsfaktor $K_1$ als konstant vorzugeben. Dabei kann ein optimiertes Beschleunigungsverhalten im Sinne eines schnellen Ansprechens auf einen Beschleunigungswunsch des Fahrzeugführers erzielt werden, indem der Proportionalitätsfaktor $K_1$ gleich dem Wert $K_{11}$ gewählt wird. Bei größeren Schlupfwerten liegt dann allerdings die Dämpfung von Antriebsstrangschwingungen unterhalb des Wertes für den aperiodischen Fall.

Das Moment $T_{sub}$ ergibt sich somit entsprechend dem Schritt 1.6 nach folgender Gleichung:

$$T_{sub} = K_1 {}^* ( \Omega_{ist,Motor} - \Omega_{ist,Räder} ).$$

Ebenso ist auch eine Variationsmöglichkeit im Rahmen des erfindungsgemäßen Verfahrens gegeben, indem anstatt der Differenz der Drehzahlen $\Omega_{ist,Motor}$ und $\Omega_{ist,Räder}$ beispielsweise mittels Dehnungsmeßstreifen die Torsion des Antriebsstranges unmittelbar gemessen wird und das abzuziehende Moment $T_{sub}$ proportional zu der Zeitableitung der festgestellten Torsion gewählt wird.

Fig. 2 zeigt eine näherungsweise Beschreibung des schwingungsfähigen Systems Motor 2.1 <-> Antriebsstrang 2.2 <-> Räder 2.3 bei niedrigem Radschlupf. Dabei besteht aufgrund der steilen Steigung der $\mu$-$\sigma$-Kurve eine feste Kopplung 2.4 der Fahrzeugmasse $m_{Fzg}$ 2.5 an das Trägheitsmoment der Räder, so daß in diesem Fall ein sich aus dieser Fahrzeugmasse $m_{Fzg}$ 2.5 ergebendes Trägheitsmoment $I_{Fahrzeug}$ berücksichtigt werden muß entsprechend dem Schritt 1.4.1.1 in dem erfindungsgemäßen Verfahrensablauf der Darstellung der Fig. 1.

Fig. 3 zeigt eine näherungsweise Beschreibung des schwingungsfähigen Systems Motor 3.1 <-> Antriebsstrang 3.2 <-> Räder 3.3 bei dem der maximalen Traktion entsprechenden Radschlupf. Aufgrund der Bedingung, daß die Steigung der $\mu$-$\sigma$-Kurve in diesem Punkt gleich Null ist, besteht keine Kopplung 3.4 der Fahrzeugmasse $m_{Fzg}$ 3.5 an das Trägheitsmoment der Räder, so daß in diesem Fall keine Berücksichtigung der Fahrzeugmasse $m_{Fzg}$ 3.5 erfolgt.

Fig. 4 zeigt den Verlauf einer $\mu$-$\sigma$-Kurve (Kraftschluß-Radschlupf-Kurve), aus dem in Verbindung mit der Darstellung der Fig. 5 eine Variation des Proportionalitätsfaktors $K_1$ mit dem Radschlupf $\sigma$ zu entnehmen ist. Bei niedrigen Schlupfwerten bis zu dem Wert $\sigma = \frac{1}{2}\sigma_0$ nimmt dieser Proportionalitätsfaktor $K_1$ den Wert $K_{11}$ an und geht dann linear ansteigend zu dem Wert $K_{12}$ über, der bei dem Wert des Schlupfes $\sigma = \sigma_0$ erreicht wird.

Das erfindungsgemäße Verfahren erfordert eine Meßwertaufnahme sowie eine Weiterverarbeitung der aufgenommenen Meßwerte mit einer sehr kurzen Zeitverzögerung. Ein Ausführungsbeispiel dafür ist in den Fig. 6-9 gegeben, die im folgenden beschrieben werden sollen.

Gemäß der Darstellung der Fig. 6 weist ein sägezahnförmiges Impulsrad ansteigende Flanken 6.1 und 6.2 sowie abfallende Flanken 6.3 und 6.4 auf. Die ansteigenden Flanken 6.1 und 6.2 führen zu einem Anstieg im Verlauf des Meßsignales, die abfallenden Flanken 6.3 und 6.4 führen zu einem Abfall im Verlauf

4

des Meßsignales.

In Fig. 7 ist eine erste Auswertungsmöglichkeit des Meßsignales dargestellt, bei der die Drehzahl ermittelt wird, indem die Zeitdauer von einer ansteigenden Flanke 6.1 zur nächsten ansteigenden Flanke 6.2 bestimmt wird. Zwischenzeitlich wird der Wert der Drehzahl wieder aktualisiert, weil zusätzlich die Zeitdauer von einer (in diesem Fall nur durch gepunktete Linien dargestellten) abfallenden Flanke zur nächsten 6.3 bestimmt wird.

Ein zweite Auswertungsmöglichkeit des Meßsignales ist in Fig. 8 dargestellt. Es wird dort ein Wert der Drehzahl bestimmt, indem die Zeitdauer von einer ansteigenden Flanke 6.1 zur nächsten abfallenden Flanke 6.3 ermittelt wird. Ein neuer Wert der Drehzahl ergibt sich dann, indem die Zeitdauer von der abfallenden Flanke 6.3 zur nächsten ansteigenden Flanke 6.2 ermittelt wird. Entsprechend wird der Wert der Drehzahl wiederum aktualisiert, indem die Zeitdauer von der ansteigenden Flanke 6.2 zur nächsten abfallenden Flanke 6.4 ermittelt wird.

Entsprechend der Darstellung der Fig. 9 kann eine Filterung des entsprechend den Fig. 6 oder 7 gewonnen Meßsignales $\Omega_{mess}$ erfolgen, indem gemäß dem Schritt 9.1 der aktuelle Wert $\Omega_{mess,aktuell}$ mit dem bisher ermittelten Wert der Drehzahl $\Omega_{alt}$ verglichen wird, um die aktuelle Drehzahl $\Omega_{aktuell}$ zu erhalten. Liegt der nächste Wert der gemessenen Drehzahl $\Omega_{mess,aktuell}$ vor, so entspricht der Wert der Drehzahl $\Omega_{alt}$ bei der erneuten Bestimmung der Drehzahl dem Wert $\Omega_{aktuell}$ bei der vorhergehenden Bestimmung der Drehzahl. Da sich somit ein zeitlich treppenförmiger Verlauf der Drehzahl ergibt, wird in einer besonders vorteilhaften Ausführungsform der Signalverlauf $\Omega_{aktuell}$ einer Tiefpaßfilterung unterzogen, die beispielsweise durch ein $PT_1$-Glied realisiert sein kann.

**Patentansprüche**

**1.** Verfahren zur Bestimmung eines den Fahrkomfort optimierenden Wertes des Antriebsmomentes einer Brennkraftmaschime in einem Fahrzeug mit einem Antriebsstrang,
wobei die Drehzahlen an der Antriebs- und der Abtriebsseite des Antriebsstranges gemessen werden,
wobei diese Drehzahlen repräsentierende Signale einer Recheneinheit zugeführt werden,
wobei in der Recheneinheit ein mit zunehmender Differenz dieser Drehzahlen größer werdendes Moment abgeleitet wird,
wobei in der Recheneinheit ein Sollwert des Antriebsmomentes ermittelt wird, indem von dem von dem Fahrzeugführer vorgegebenen Sollwert des Antriebsmomentes das in der Recheneinheit abgeleitete Moment abgezogen wird und
wobei von der Recheneinheit Stellgrößen der Brennkraftmaschine derart angesteuert werden, daß der Istwert des Antriebsmomentes den ermittelten Sollwert annimmt
**dadurch gekennzeichnet,**
daß die Rückwirkung (2.4, 3.4) der Fahrzeugmasse $m_{Fzg}$ (2.5, 3.5) auf das schwingungsfähige System Motor (2.1, 3.1) <-> Antriebsstrang (2.2, 3.2) <-> Räder (2.3, 3.3) entsprechend den momentan vorliegenden Fahr- und Straßenbedingungen derart berücksichtigt wird, daß bei einer großen Steigung der $\mu$-$\sigma$-Kurve - der Kraftschlußbeiwert-Radschlupf-Kurve - ein geringerer Wert des Momentes abgeleitet wird als bei einer kleineren Steigung der $\mu$-$\sigma$-Kurve.

**2.** Verfahren nach Anspruch 1,
wobei das Moment bestimmt wird, indem die Differenz der Drehzahlen mit einem Proportionalitätsfaktor $K_1$ multipliziert wird,
**dadurch gekennzeichnet,**
daß der Wert dieses Proportionalitätsfaktors $K_1$ derart variiert, daß er in Abhängigkeit der Steigung der $\mu$-$\sigma$-Kurve bei einer großen Steigung einen geringen Wert annimmt und daß er bei einer geringen Steigung der $\mu$-$\sigma$-Kurve einen großen Wert annimmt.

**3.** Verfahren nach Anspruch 1 oder 2,
**dadurch gekennzeichnet,**
daß die Steigung der $\mu$-$\sigma$-Kurve aus dem Radschlupf $\sigma$ abgeleitet wird.

**4.** Verfahren nach Anspruch 3,
**dadurch gekennzeichnet,**
daß die Steigung der $\mu$-$\sigma$-Kurve ausgehend von dem Schlupfwert $\sigma = 0$ bis zur Hälfte des Schlupfwertes $\sigma_0$, an dem die $\mu$-$\sigma$-Kurve ihr Maximum aufweist, als konstant angenommen wird, so daß ein in Abhängigkeit der Steigung der $\mu$-$\sigma$-Kurve bestimmter Proportionalitätsfaktor $K_1$ in diesem Bereich

konstant ist.

5. Verfahren nach Anspruch 4,
**dadurch gekennzeichnet,**
daß der Proportionalitätsfaktor $K_1$ bei dem Schlupfwert $\sigma_0$ den Maximalwert annimmt.

6. Verfahren nach Anspruch 5,
**dadurch gekennzeichnet,**
daß der Proportionalitatsfaktor $K_1$ linear ansteigt von dem Schlupfwert $\frac{1}{2}\sigma_0$ zu dem Schlupfwert $\sigma_0$.

**Claims**

1. Process for determining a driving moment, of a combustion motor, which optimizes passenger comfort in a vehicle with a drive line, whereby rev-rates on a driving side and a power take-off side are measured,
whereby signals representing these rev-rates are fed into a computing unit,
whereby a moment which becomes larger with increasing difference in these rev-rates is detected in a said computing unit,
whereby a required value of a driving moment is determined in a said computing unit by subtraction of a required value of a driving moment, set by a driver, from a moment detected in a said computing unit, and
whereby set values for a combustion motor are controlled by a computing unit such that an actual value of a driving moment takes on a determined required value,
**wherein**
a reactive effect (2.4, 3.4) of a mass $m_{Fzg}$ (2.5, 3.5) of a vehicle on a system motor (2.1, 3,1) which oscillates, a driving line (2.2, 3.2) and on wheels (2.3, 3.3) is taken into consideration according to momentaneously occurring driving and street conditions such that with a large rise in a frictional connection factor-wheel slip curve - a $\mu$-$\sigma$ curve - a lower value of a moment is deduced than in a case of a smaller rise of a said $\mu$-$\sigma$ curve.

2. Process in accordance with claim 1, whereby a moment is determined by multiplying a difference in rev-rates by a proportionality factor $K_1$,
**wherein**
a value of this proportionality factor $K_1$ varies such that, dependent on a rise in a $\mu$-$\sigma$ curve, with a large rise in a said curve it takes on a low value and takes on a high value when there is a low rise in a said $\mu$-$\sigma$ curve.

3. Process in accordance with claim 1 or claim 2,
**wherein**
a rise in a $\mu$-$\sigma$ curve is determined from wheel slip $\sigma$.

4. Process in accordance with claim 3,
**wherein**
a rise in a $\mu$-$\sigma$ curve starting from a slip value $\sigma = 0$ up to a half of slip value $\sigma_0$, at which a said $\mu$-$\sigma$ curve has its maximum, is taken to be a constant, such that a proportionality factor $K_1$ determined in accordance with a rise in a $\mu$-$\sigma$ curve is constant in this range.

5. Process in accordance with claim 4,
**wherein**
a proportionality factor $K_1$ has a maximum value at a point when a slip value concerned is $\sigma_0$.

6. Process in accordance with claim 5,
**wherein**
a proportionality factor $K_1$ rises linearly from a slip value $\frac{1}{2}\sigma_0$ to a slip value $\sigma_0$.

## Revendications

1. Procédé pour déterminer une valeur du couple d'entraînement du moteur à combustion interne d'un véhicule comportant une chaîne cinématique qui optimise le confort de conduite,

   dans lequel on mesure les vitesses de rotation du côté d'entrée et du côté de sortie de la chaîne cinématique, dans lequel des signaux représentant ces vitesses de rotation sont transmis à une unité de calcul,

   dans lequel un couple croissant avec l'accroissement de la différence de ces vitesses de rotation est obtenu dans l'unité de calcul,

   dans lequel, dans l'unité de calcul, une valeur de consigne du couple d'entraînement est calculée en déduisant de la valeur de consigne du couple d'entraînement prédéterminée par le conducteur du véhicule le couple qui a été obtenu dans l'unité de calcul et

   dans lequel l'unité de calcul pilote des grandeurs réglantes du moteur à combustion interne de manière que la valeur réelle du couple d'entraînement prenne la valeur de consigne calculée,

   caractérisé

   en ce que la réaction (2.4, 3.4) de la masse du véhicule $m_{vh}$ (2.5, 3.5) sur le système oscillant moteur (2.1, 3.1) $\leftrightarrow$ chaîne cinématique (2.2, 3.2) $\leftrightarrow$ roues (2.3, 3.3) est prise en compte en fonction des conditions de conduite et de route existant au moment considéré de telle manière que, dans le cas d'une forte pente de la courbe $\mu$-$\sigma$ - la courbe coefficient d'adhérence- patinage des roues- on fournit une plus petite valeur du couple que dans le cas d'une pente moins raide de la courbe $\mu$-$\sigma$.

2. Procédé selon la revendication 1,

   dans lequel on détermine le couple en multipliant la différence des vitesses de rotation par un facteur de proportionnalité $K_1$,

   caractérisé

   en ce qu'on fait varier la valeur de ce facteur de proportionnalité $K_1$ en fonction de la pente de la courbe $\mu$-$\sigma$, en lui faisant prendre une valeur faible dans le cas d'une forte pente de la courbe $\mu$-$\sigma$ et une valeur forte dans le cas d'une faible pente de cette courbe.

3. Procédé selon la revendication 1 ou 2,

   caractérisé

   en ce que la pente de la courbe $\mu$-$\sigma$ est obtenu à partir du patinage des roues $\sigma$.

4. Procédé selon la revendication 3,

   caractérisé

   en ce que, dans la région allant de la valeur de patinage $\sigma = 0$ jusqu'à la moitié de la valeur $\sigma_0$, à laquelle la courbe $\mu$-$\sigma$ présente son maximum, la pente de la courbe $\mu$-$\sigma$ est considérée comme constante, de sorte qu'un facteur de proportionnalité $K_1$ déterminé en fonction de la pente de la courbe $\mu$-$\sigma$ est constant dans cette région.

5. Procédé selon la revendication 4,

   caractérisé

   en ce que le facteur de proportionnalité $K_1$ prend la valeur maximale en présence de la valeur $\sigma_0$ du patinage.

6. Procédé selon la revendication 5,

   caractérisé

   en ce que le facteur de proportionnalité $K_1$ croît linéairement de la valeur $\frac{1}{2}\sigma_0$ du patinage à la valeur $\sigma_0$ de ce patinage.

$$\Omega_{ist,Motor} = \Omega_{mess,Motor}$$

$$\Omega_{ist,R\ddot{a}der} = \frac{\Omega_{mess,R\ddot{a}der}}{\ddot{U}_{Achse} * \ddot{U}_{Getriebe}}$$

$$I_{Fahrzeug} = m_{Fzg} * R_{dyn}^{2}$$

$$I_{ist,Fahrzeug} = \frac{I_{Fahrzeug}}{(\ddot{U}_{Achse} * \ddot{U}_{Getriebe})^{2}}$$

$$I_{ist,R\ddot{a}der} = \frac{I_{R\ddot{a}der}}{(\ddot{U}_{Achse} \ddot{U}_{Getriebe})^{2}}$$

**Fig. 1**

1.4.1 $\sigma < \frac{1}{2}\sigma_0$  nein

1.4.2 $\frac{1}{2}\sigma_0 \leq \sigma < \sigma_0$  nein

ja

1.4.1.1
$$K_1 = K_{11} \equiv \sqrt{c * \left(\frac{1}{I_{Motor}} + \frac{1}{I_{ist,R\ddot{a}der} + I_{ist,Fahrzeug}}\right)}$$

ja

1.4.2.1
$$K_1 = \frac{K_{12} - K_{11}}{\frac{1}{2}\sigma_0} * (\sigma - \frac{1}{2}\sigma_0) + K_{11}$$

1.4.3
$$K_1 = K_{12} \equiv \sqrt{c * \left(\frac{1}{I_{Motor}} + \frac{1}{I_{ist\ R\ddot{a}der}}\right)}$$

1.5
$$K_1 = K_{11}$$

1.6
$$T_{sub} = K_1 * (\Omega_{ist,Motor} - \Omega_{ist,R\ddot{a}der})$$

## Fig. 2

## Fig. 3

## Fig. 4

## Fig. 5

Fig. 6

Fig. 7

Fig. 8

Fig. 9

$$\Omega_{aktuell} = 2 * \Omega_{mess} - \Omega_{alt}$$